# EUROPEAN PATENT APPLICATION

(11) **EP 4 737 705 A1**
(43) Date of publication of application: **06.05.2026**
(21) Application number: 24209847.3
(22) Date of filing: 30.10.2024
(51) Int. Cl.: F03D 1/06, F03D 80/00

(54) **SERRATED PANEL FOR A WIND TURBINE ROTOR BLADE**

(71) Applicant: Nordex Energy SE & Co. KG, 22419 Hamburg (DE)
(72) Inventor: Lipka, Thomas, 22419 Hamburg (DE); Rautmann, Christof, 22419 Hamburg (DE); Sidorov, Gennady, 22419 Hamburg (DE)
(74) Representative: Hauck Patent- und Rechtsanwälte PartmbB

(57) **Abstract**

A serrated panel for a trailing edge of a wind turbine rotor blade, the serrated panel comprising:
• an attachment section having a leading edge, an attachment surface for connecting the serrated panel to a trailing edge of a wind turbine rotor blade, a rear end, and an external surface opposite the attachment surface,
• a plurality of teeth, each tooth having a tip, a base which is arranged at the rear end of the attachment section, a longitudinal axis extending from the base to the tip, a pressure side surface, and a suction side surface,
• wherein the external surface of the attachment section for each tooth has a transition surface forming a transition between the leading edge and the pressure side surface of the tooth, characterized in that
• in a longitudinal section in a first plane that is perpendicular to the attachment surface and extends along the longitudinal axis of the tooth, the transition surface has a forward, concave section and a rearward, convex section, wherein the forward, concave section is arranged nearer to the leading edge of the attachment section than the rearward, convex section.

## Description

The invention relates to a serrated panel for the trailing edge of a wind turbine rotor blade.

These panels have been suggested for noise reduction in wind turbines. The panels are designed with a series of teeth placed along the trailing edge of the wind turbine rotor blade, which can help to reduce aerodynamic noise generated by the rotor blade. In particular, the serrations on the trailing edge of a wind turbine rotor blade change the local flow behavior at the trailing edge and the interaction of turbulent vortices with the trailing edge, thereby reducing the overall noise level produced by the wind turbine.

Studies have shown that the use of serrated panels can reduce the noise level of wind turbines significantly. This can help to make wind turbines more acceptable to local communities by reducing the impact of noise pollution.

EP 3 084 209 B1 shows a serrated panel for a wind turbine rotor blade having a base portion for attachment to a surface of a wind turbine rotor blade and a plurality of serrations projecting from the base portion. The base portion has a series of partial cutouts defining projecting elements. The projecting elements are linked to the serrations so that a bending movement of a serration will result in a corresponding movement of a projecting element which shall act as a deployable vortex generator.

EP 2 867 523 B1 shows a serrated panel for a wind turbine rotor blade having serrations provided with stiffening ribs.

WO 2014/044414 A1 shows a serrated panel for a wind turbine rotor blade having serrations arranged at an angle of 75° to 90° to a trailing edge of the wind turbine rotor blade.

EP 3 169 898 B1 shows a serrated panel for a wind turbine rotor blade having asymmetrically shaped serrations.

EP 3 205 874 B2 describes a serrated panel for a wind turbine rotor blade having a base portion for attachment to a surface of a wind turbine rotor blade and a plurality of serrations projecting from the base portion. The base portion has a corrugated external surface with valleys and crests. The crests are aligned with longitudinal midlines of the serrations and the valleys are aligned between serrations. The corrugated surface may be triangular, saw tooth shaped or sinusoidal.

Departing therefrom, it is an object of the invention to provide a serrated panel offering improved noise reduction.

This problem is solved by the serrated panel with the features of claim 1. Preferred aspects are given in the dependent claims.

The serrated panel is designed for a trailing edge of a wind turbine rotor blade and comprises:
- an attachment section having a leading edge, an attachment surface for connecting the serrated panel to a trailing edge of a wind turbine rotor blade, a rear end, and an external surface opposite the attachment surface,
- a plurality of teeth, each tooth having a tip, a base which is arranged at the rear end of the attachment section, a longitudinal axis extending from the base to the tip, a pressure side surface, and a suction side surface,
- wherein the external surface of the attachment section for each tooth has a transition surface forming a transition between the leading edge and the pressure side surface of the tooth, wherein
- in a longitudinal section in a first plane that is perpendicular to the attachment surface and extends along the longitudinal axis of the tooth, the transition surface has a forward, concave section and a rearward, convex section, wherein the forward, concave section is arranged nearer to the leading edge of the attachment section than the rearward, convex section.

The serrated panel is designed for being attached to a wind turbine rotor blade at a trailing edge of the wind turbine rotor blade. To this end, it has an attachment section with an attachment surface which can be connected to the wind turbine rotor blade, in particular by means of an adhesive, for example in liquid form or as an adhesive tape. The attachment section forms a front portion of the serrated panel. The front edge of the attachment section is referred to as leading edge. The other end of the attachment section is its rear end.

The teeth extend from the rear end of the attachment section, where each tooth has its base which extends over a certain width of the rear end. The base may be formed by an imaginary, straight line which connects the recesses formed between adj acent teeth, in particular two forward ends of these recesses. Altogether, the plurality of teeth form a rear portion of the serrated panel. Each tooth has a tip and a longitudinal axis extending from the base to the tip. The longitudinal axis generally describes a longitudinal direction of the respective tooth. The longitudinal axis may in particular extend through a midpoint of the base. The point where the longitudinal axis bisects the base may also be shifted towards one side, for example when the tooth has an asymmetrical shape.

The geometry of all of the teeth may be the same, so that all teeth have the same width, length and shape. However, this is not required. Each tooth has a pressure side surface and a suction side surface. In use, the air surrounding the wind turbine rotor blade will pass these aerodynamic surfaces. The pressure side surface of a tooth will point to the same side as the pressure side of the wind turbine rotor blade, and the suction side surface of the tooth will point to the same side as the suction side of the wind turbine rotor blade. The external surface of the attachment section points generally to the same side as the pressure side surface of the teeth. The external surface may have a basically rectangular shape, forming a strip arranged forward of the plurality of teeth. A section of the external surface arranged forward of a certain tooth forms a transition between the leading edge and the pressure side surface of that tooth.

In accordance with the invention, the transition surface has a forward, concave section and a rearward, convex section, when seen in a longitudinal section in a first plane that is perpendicular to the attachment surface and extends along the longitudinal axis of the tooth. The concave section may begin at the leading edge, but it is also possible that the external surface comprises one or more straight sections, in particular one straight section arranged between the leading edge and the concave section. The rearward, convex section may end at the rear end of the attachment section, where the tooth begins. However, also in-between the base of the tooth and the concave section, a straight section may be present, as well as in-between the concave section and the convex section.

What is important is that air flowing from the pressure side of the wind turbine rotor blade beyond the leading edge of the attachment section flows smoothly along the concave section and the convex section towards the adjacent tooth. To this end, it is preferred that a tangent to the concave section at or near the leading edge is arranged parallel to the pressure side of the wind turbine rotor blade near the trailing edge, and/or that a tangent to the convex section at the rear end is parallel to the adjacent pressure side of the respective tooth (always seen in the longitudinal section).

The inventors found that the specific design of the transition surface helps achieving a smooth flow up to the rear end and beyond. In particular, less turbulence occurs at the side edges of the teeth when compared to conventional serrated panels. It is believed that in conventional designs, small turbulences may arise already at the leading edge, at the transition surface and in particular at a transition between the transition surface and the pressure side surface of the tooth. Overall, significant flow optimization was obtained by means of the combination of a concave section and a convex section of the transition surface, leading to significantly less noise emission at the trailing edge.

The teeth of serrated panels are sometimes referred to as primary aerodynamic elements, in particular when trying to distinguish these from secondary aerodynamic elements consisting of smaller bristles, tines or surface features arranged on, at or beyond the teeth. It is understood that the inventive serrated panel may be equipped with any type of secondary aerodynamic elements.

In an aspect, the pressure side surface comprises two planar surfaces meeting along a ridge of the respective tooth, the ridge extending between the tip and an apex near a midpoint of the base. This shape helps to provide the teeth with sufficient stiffness and good aerodynamic properties.

In an aspect, the ridge of the tooth is arranged in the first plane. The convex section of the transition surface may transition smoothly into the ridge.

In an aspect, the transition surface comprises a ridge arranged in continuation of the ridge of the tooth. The ridge of the transition surface may be arranged also in the first plane. The ridge of the transition surface may help to smoothly divide the airflow in two parts which then pass by the planar surfaces of the tooth.

In an aspect, in a longitudinal section in a second plane that is parallel to the first plane, the transition surface has a forward, concave section and a rearward, convex section. The above explanations referring to the concave and convex sections of the transition surface in the first plane apply to the corresponding sections in the second plane as well.

In an aspect, the concave section in the first plane transitions smoothly into the convex section in the first plane and/or the concave section in the second plane transitions smoothly into the convex section in the second plane. "Transitions smoothly" means there is no gap, step or kink between the two sections. The smooth transition between the concave and convex sections also helps to obtain smooth flow.

In an aspect, the convex section in the first plane transitions smoothly into the ridge of the tooth.

In an aspect, the convex section in the second plane transitions smoothly into the pressure side surface of the tooth. In particular, the convex section in the second plane may transition smoothly into one of the two planar surfaces forming the pressure side surface of the tooth.

In an aspect, the serrated panel has a reference line adapted to be positioned at the trailing edge when the serrated panel is mounted to the wind turbine rotor blade. The reference line may be parallel to the leading edge of the attachment section. The reference line may be arranged in the same distance from the leading edge as the bases of the teeth. The reference line may be at or near the rear end of the attachment section. The position of the reference line may possibly be indicated by an edge, or by one or more markers, formed in an outer surface of the serrated panel, so that, when mounting the serrated panel to the wind turbine rotor blade, the correct position can easily be seen. The reference line may also comprise one or more mechanical stops that can interact with the wind turbine rotor blade, in particular with the trailing edge thereof, to facilitate correct positioning of the serrated panel at the trailing edge.

In an aspect, the longitudinal axis of the tooth is arranged at an angle to the reference line in the range of 60° to 88°. This corresponds to a shear angle of the tooth in the range of 2° to 30°. In general, the tooth may also be arranged perpendicular to the reference line and/or exactly chord-wise when referring to the geometry of the wind turbine rotor blade. However, the complex geometry of the wind turbine rotor blade often leads to the air flowing at a certain angle with reference to the chord direction, in particular at or even behind the trailing edge of the wind turbine rotor blade. The angled arrangement of the longitudinal axis of the tooth can be selected such that the air flows essentially along the longitudinal axis, so that the tooth can influence the airflow in the desired manner.

In an aspect, in a cross section in a third plane that is perpendicular to the attachment surface and perpendicular to the first plane, the transition surface comprises two concave sections forming the ridge of the transition surface. The third plane may be parallel to the reference line. When the transition surface is provided with a ridge, the adjacent surfaces can also be formed planar, as has been described above for the pressure side surface of the tooth. Concave sections have been found to provide a more pronounced ridge which may help influencing the airflow in the desired manner.

In an aspect, in a cross-section in a fourth plane that is perpendicular to the attachment surface and perpendicular to the first plane, the tooth is triangular. In particular, the fourth plane may include an apex of the tooth.

In an aspect, the tooth comprises two straight side edges running from the tip to one end of the base. In general, these edges may also be provided with a curvature. However, straight edges and a correspondingly generally triangular shape of the tooth has advantages, for example when combining secondary aerodynamic elements formed at the edges of the tooth.

In the following, the invention is explained in greater detail based on drawings. The figures show:
- Fig. 1: shows a wind turbine rotor blade with a serrated panel in a perspective view,
- Fig. 2: a serrated panel in a top view,
- Fig. 3: the serrated panel of Fig. 2 in a perspective view, cut along a first plane,
- Fig. 4: the serrated panel of Fig. 2 in a perspective view, cut along a second plane,
- Fig. 5: a section of the serrated panel of Fig. 2 in a perspective view, cut along a transverse plane,
- Fig. 6: the section shown in Fig. 5, cut along a third plane,
- Fig. 7: the section shown in Figs. 5 and 6, cut along a fourth plane,
- Fig. 8: another serrated panel in a top view,
- Fig. 9: a section of the serrated panel of Fig. 8 in another top view,
- Fig. 10: the section shown in Fig. 9 in a perspective view.

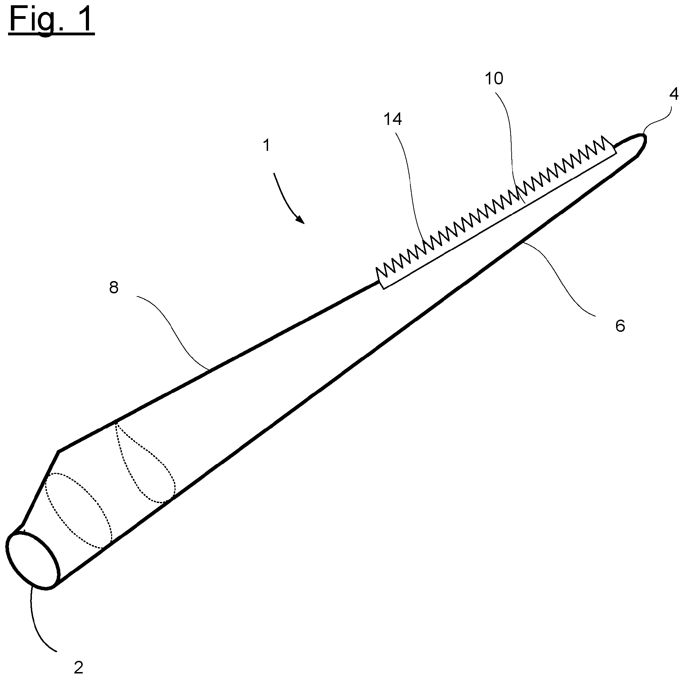

Figure 1 shows a wind turbine rotor blade 1 having a blade root 2, a blade tip 4, a leading edge 6 and a trailing edge 8. In cross-section, the wind turbine rotor blade 1 has an aerodynamic profile. The spanwise direction extends from the blade root 2 towards the blade tip 4. The chordwise direction extends perpendicular to the spanwise direction from the leading edge 6 towards the trailing edge 8.

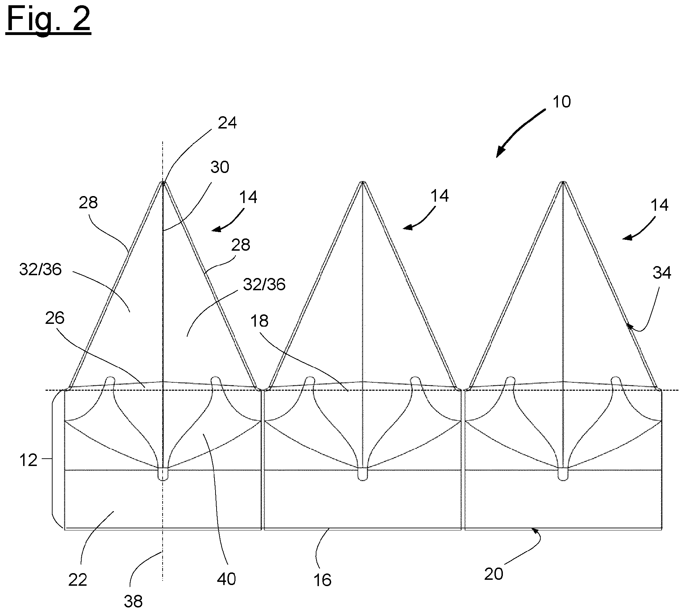

An outer length section of the wind turbine rotor blade is provided with a serrated panel 10, which is attached to an outer surface of the wind turbine rotor blade 1 and has a plurality of teeth 14. The serrated panel 10 is positioned such that the bases 26 (see Fig. 2) of the teeth 22 are aligned with the trailing edge 8.

The serrated panel 10 of Fig. 2 has an attachment section 12 and a plurality of teeth 14. The attachment section 12 has a leading edge 16 and a rear end 18 indicated by a dashed line. At the back of the attachment section 12, away from the viewer, the attachment section 12 has an attachment surface 20 extending over the entire back of the attachment section 12.

Also, on the back of the serrated panel 10, the same has a reference line marked in the outer surface of the serrated panel 10. The position of the reference line (not shown in Fig. 1) corresponds to the rear end 18. The outer surface of the attachment section 12 facing the viewer forms an external surface 22.

Each of the teeth 14 has a tip 24 and a base 26 indicated in Fig. 2 by a double arrow. The position of the base 26 is at the rear end 18 of the attachment section 12, where the attachment section 12 transitions into the teeth 14. Each tooth 14 further has two side edges 28, each running from the tip 24 to one end of the base 26. The side of the teeth 14 facing the viewer in Fig. 2 has a pressure side surface 32, the side facing away from the viewer is a suction side surface 34. The pressure side surface 32 is divided into two planar surfaces 36 by a ridge 30 formed along a longitudinal axis 38 of the tooth 14. The planar surfaces 36 extend from the ridge 30 to the respective side edge 28.

The external surface 22 for each tooth 14 comprises a transition surface 40 forming a transition between the leading edge 16 and the pressure side surface 32 of the respective tooth 14.

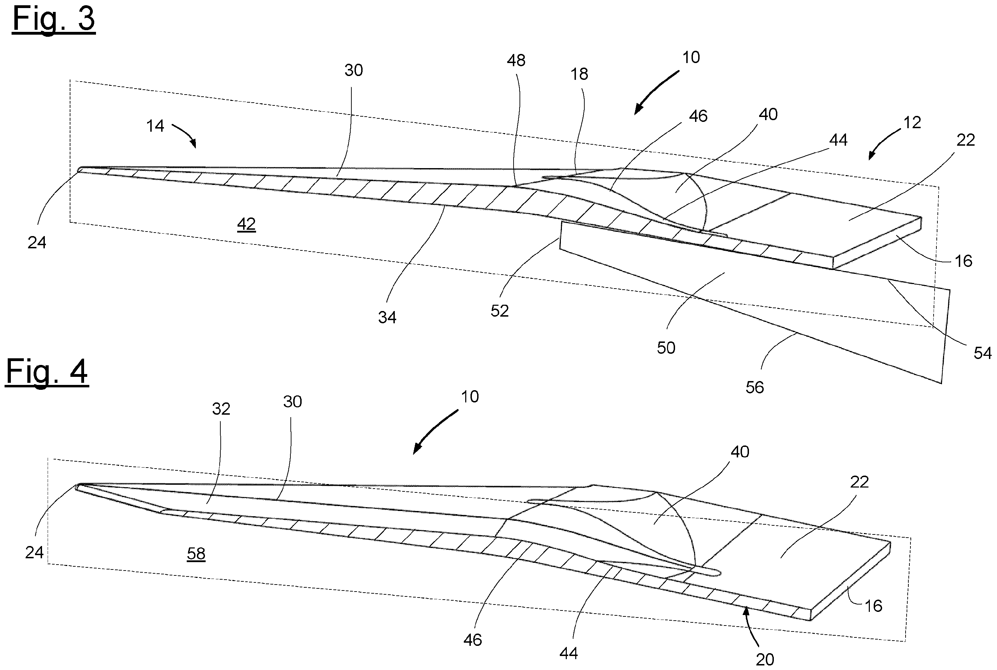

We note the lines drawn within the boundary lines of the serrated panel 10 in Fig. 2 and the remaining Figs. originate from a CAD model describing the surface topology. These lines do not necessarily correspond to visible edges of the serrated panel 10. Details on the geometry of the serrated panel 10 can best be seen in the partly sectional views of Figs. 3 to 7.

Figure 3 shows a perspective view of the serrated panel 10 cut along a first plane 42. The first plane 42 is perpendicular to the attachment surface 20 and is aligned with the longitudinal axis 38 (not shown in Fig. 3). One can see that the attachment section 12 near the leading edge 16 has a constant thickness, both in a direction following the leading edge 16 and also in a direction of the longitudinal axis. At some distance from the leading edge 16, the transition surface 40 begins with a forward, concave section 44 followed by a rearward, convex section 46. The convex section 46 ends at the rear end 18 of the attachment section 12 where the convex section 46 smoothly transitions into the pressure side surface 32 of the tooth 14, namely into the ridge 30 which lies in the first plane 42.

A thickness of the serrated panel 10, measured perpendicular to the attachment surface 20 in the first plane 42, is constantly growing from the beginning of the concave section 44 up to the end of the convex section 46, where an apex 48 is formed. From the apex 48 up to the tip 24, the thickness of the serrated panel 10 decreases constantly. Approximately at the rear end 18, where the tooth 14 begins, the serrated panel 10 forms an angle, because the tooth 14 with reference to the plane in which the attachment surface 20 is arranged is slightly folded towards the suction side surface 34.

Figure 3 also shows schematically a part of a wind turbine rotor blade 50 including a trailing edge 52. The wind turbine rotor blade 50 has a pressure side 54 and a suction side 56. The rear end 18 of the serrated panel 10 is arranged at the trailing edge 52 of the wind turbine rotor blade 50.

Figure 4 shows a view similar to the one of Fig. 3, wherein the longitudinal section is shifted to a second plane 58 which is parallel to the first plane 42, arranged a little closer to the viewer. In the second plane 58, the transition surface 40 comprises a concave section 44 and a convex section 46.

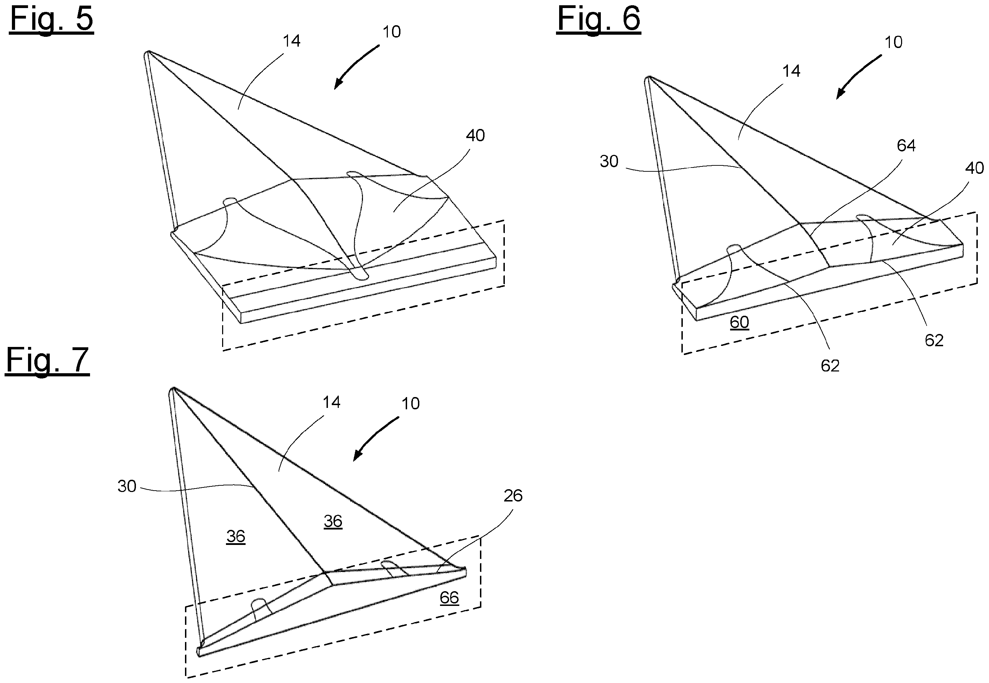

In Fig. 5, a section of the serrated panel 10 of Fig. 1 is shown, cut along a transverse plane arranged just before the transition surface 40. In this plane, the section has a rectangular cross-section and a constant thickness.

Figure 6 shows in the same section of a serrated panel 10 as is shown in Fig. 5, cut along a third plane 60. The third plane 60 is arranged perpendicular to the attachment surface 20 and perpendicular to the first plane 42 (not shown in Fig. 6). The transition surface 40 in this cross-section comprises two concave sections 62 meeting at a ridge 64 of the transition surface 40. The ridge 64 is arranged in the first plane and smoothly transitions into the ridge 30 of the tooth 14. At the outer ends of the transition surface 40, the transition surface 40 in the third plane 60 is arranged parallel to the attachment surface.

Figure 7 shows the same section as Figs. 4 and 5 now cut along a fourth plane 66. The fourth plane 66 is perpendicular to the attachment surface 20 and to the first plane 42 and is arranged at the base 26 of the tooth 14. In the fourth plane 66, the cross-section of the tooth 14 is triangular, corresponding to the two planar surfaces 36 forming the pressure side surface 32 of the tooth 14.

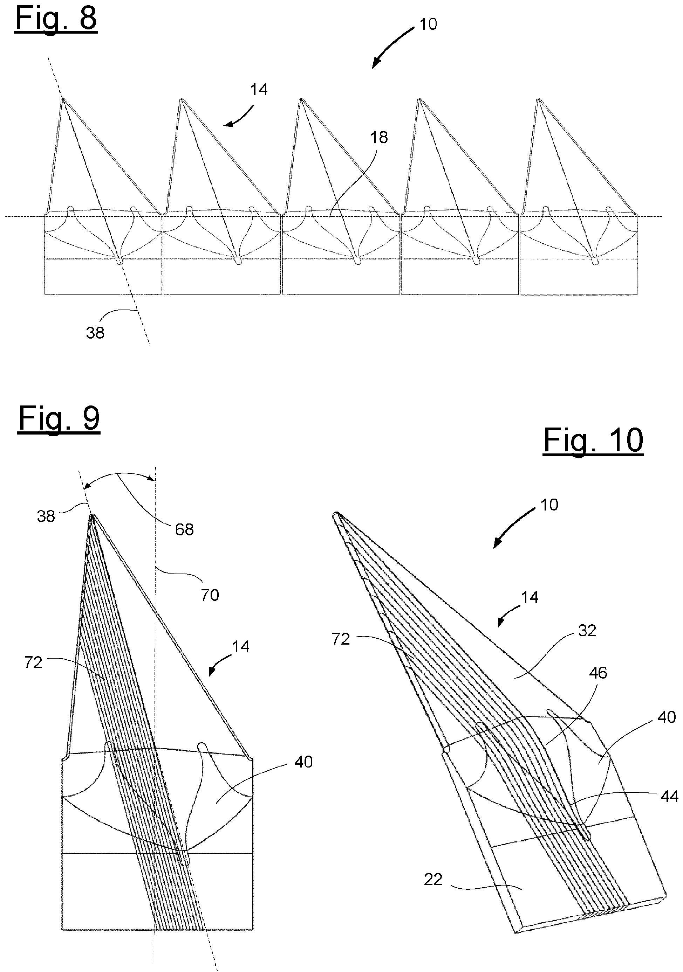

The serrated panel 10 shown in Fig. 8 is similar to the one shown in Fig. 2, but has five instead of three teeth 14, wherein the longitudinal axes 38 of the teeth 14 are arranged at an angle to the reference line, the position of which corresponds to the rear end 18, of 75°. As the rear end 18 is parallel to the leading edge 16, the angle between the longitudinal axes 38 and the leading edge 16 is also 75°.

Figure 9 illustrates the angled arrangement of the longitudinal axis 38 of one of the teeth 14 of the serrated panel 10 of Fig. 8, which is arranged at an angle 68 of 15° with reference to the direction of a chord line 70 of the wind turbine rotor blade 50 to which the serrated panel 10 is attached. For the given wind turbine rotor blade 50, the air flows along the pressure side 54 near the trailing edge 52 at an angle of 15° with reference to the chord line 70, as is illustrated by the parallel lines illustrating the airflow 72. Thanks to the angled arrangement of the tooth 14, the airflow exactly follows the longitudinal axis 38 of the tooth and smoothly flows along the concave and convex sections 44, 46 of the transition surface 40.

This can also be seen in Fig. 10 showing the same section of the serrated panel 10 as Fig. 9 in a perspective view.

### List of reference numerals

- 1: wind turbine rotor blade
- 2: blade root
- 4: blade tip
- 6: leading edge of the wind turbine rotor blade
- 8: trailing edge
- 10: serrated panel
- 12: attachment section
- 14: tooth
- 16: leading edge
- 18: rear end
- 20: attachment surface
- 22: external surface
- 24: tip
- 26: base
- 28: side edge
- 30: ridge
- 32: pressure side surface
- 34: suction side surface
- 36: planar surface
- 38: longitudinal axis
- 40: transition surface
- 42: first plane
- 44: concave section
- 46: convex section
- 48: apex
- 50: wind turbine rotor blade
- 52: trailing edge
- 54: pressure side
- 56: suction side
- 58: second plane
- 60: third plane
- 62: concave section
- 64: ridge
- 66: fourth plane
- 68: angle
- 70: chord line
- 72: airflow

## Claims

1. A serrated panel (10) for a trailing edge (52) of a wind turbine rotor blade (50), the serrated panel (10) comprising:
• an attachment section (12) having a leading edge (16), an attachment surface (20) for connecting the serrated panel (10) to a trailing edge (52) of a wind turbine rotor blade (50), a rear end (18), and an external surface (22) opposite the attachment surface (20),
• a plurality of teeth (14), each tooth (14) having a tip (24), a base (26) which is arranged at the rear end (18) of the attachment section (12), a longitudinal axis (38) extending from the base (26) to the tip (24), a pressure side surface (32), and a suction side surface (34),
• wherein the external surface (22) of the attachment section (12) for each tooth (14) has a transition surface (40) forming a transition between the leading edge (16) and the pressure side surface (32) of the tooth (14), **characterized in that**
• in a longitudinal section in a first plane (42) that is perpendicular to the attachment surface (20) and extends along the longitudinal axis (38) of the tooth (14), the transition surface (40) has a forward, concave section (44) and a rearward, convex section (46), wherein the forward, concave section (44) is arranged nearer to the leading edge (16) of the attachment section (12) than the rearward, convex section (46).

2. The serrated panel (10) of claim 1, wherein the pressure side surface (32) comprises two planar surfaces (36) meeting along a ridge (30) of the respective tooth (14), the ridge (30) extending between the tip (24) and an apex (48) near a midpoint of the base (26).

3. The serrated panel (10) of claim 2, wherein the ridge (30) of the tooth (14) is arranged in the first plane (42).

4. The serrated panel (10) of claim 2 or 3, wherein the transition surface (40) comprises a ridge (64) arranged in continuation of the ridge (30) of the tooth (14).

5. The serrated panel (10) of any of the claims 1 to 4, wherein in a longitudinal section in a second plane (58) that is parallel to the first plane (42), the transition surface (40) has a forward, concave section (44) and a rearward, convex section (46).

6. The serrated panel (10) of any of the claims 1 to 5, wherein the concave section (44) in the first plane (42) transitions smoothly into the convex section (46) in the first plane (42) and/or the concave section (44) in the second plane (58) transitions smoothly into the convex section (46) in the second plane (58).

7. The serrated panel (10) of any of the claims 1 to 4, wherein the convex section (46) in the first plane (42) transitions smoothly into the ridge (30) of the tooth (14).

8. The serrated panel (10) of any of the claims 5 to 7, wherein the convex section (46) in the second plane (58) transitions smoothly into the pressure side surface (32) of the tooth (14).

9. The serrated panel (10) of any of the claims 1 to 8, wherein the serrated panel (10) has a reference line adapted to be positioned at the trailing edge (52) when the serrated panel (10) is mounted to the wind turbine rotor blade (50).

10. The serrated panel (10) of any of the claims 1 to 9, wherein the longitudinal axis (38) of the tooth (14) is arranged at an angle to the reference line in the range of 60° to 88°.

11. The serrated panel (10) of any of the claims 1 to 10, wherein in a cross section in a third plane (60) that is perpendicular to the attachment surface (20) and perpendicular to the first plane (42), the transition surface (40) comprises two concave sections (62) forming a ridge (64) of the transition surface (40).

12. The serrated panel (10) of any of the claims 1 to 11, wherein in a cross section in a fourth plane (66) that is perpendicular to the attachment surface (20) and perpendicular to the first plane (42), the tooth (14) is triangular.

13. The serrated panel (10) of any of the claims 1 to 12, wherein the tooth (14) comprises two straight side edges (28) running from the tip (24) to one end of the base (26).
